# EUROPEAN PATENT SPECIFICATION

(11) **EP 2 884 410 B1**
(45) Date of publication and mention of the grant of the patent: **19.07.2017**
(21) Application number: 14197864.3
(22) Date of filing: 15.12.2014
(51) Int. Cl.: G06F 17/30

(54) **A method of operating a handheld mobile telecommunication device**
Verfahren zum Betrieb einer tragbaren Mobiltelekommunikationsvorrichtung
Procédé d'exploitation d'un dispositif de télécommunication mobile portatif

(30) Priority: 16.12.2013 US 201314107107
(43) Date of publication of application: 17.06.2015
(73) Proprietor: SAP SE, 69190 Walldorf (DE)
(72) Inventor: Niessen, Rudolf, 69190 Walldorf (DE); Denkel, Christian, 69190 Walldorf (DE)
(74) Representative: Richardt Patentanwälte PartG mbB

(56) References cited:
- US-A1- 2003 025 732
- US-A1- 2004 107 403
- US-A1- 2006 117 253
- US-A1- 2009 281 976
- HAOFU HAN ET AL: "E3: : Energy-Efficient Engine for Frame Rate Adaptation on Smartphones", PROCEEDINGS OF THE 11TH ACM CONFERENCE ON EMBEDDED NETWORKED SENSOR SYSTEMS, SENSYS '13, vol. 13, 14 November 2013 (2013-11-14), pages 1-14, XP055181665, New York, New York, USA DOI: 10.1145/2517351.2517364 ISBN: 978-1-45-032027-6

## Description

### BACKGROUND

Last year's mobile data traffic was multiple times the size of the entire global Internet in 2000. Average smartphone usage grew as well in last years. For example, the average amount of traffic per smartphone or mobile device is around 500 MB per month. Further, mobile applications in the mobile devices provide a variety of display techniques. The ongoing trend in telecommunication is to provide mobile devices with enhanced performances that can support such mobile applications while controlling the amount of the data traffic as well as power consumption in the mobile devices.

US 2004/0107403 A1 discloses a method for presenting HTML content on a small screen terminal display.

Haofu Han et al., Proceedings of the 11th ACM conference on embedded networked sensor systems, SENSYS 13, vol. 13, 14 November 2013, pages 1-4 discloses an energy-efficient engine for frame rate adaptation on smartphones.

### SUMMARY

Various embodiments provide a telecommunication method, a mobile telecommunication device and a telecommunication system as described by the subject matter of the independent claims. Advantageous embodiments are described in the dependent claims.

In one aspect, the invention relates to a telecommunication method for operating a handheld mobile telecommunication device (referred to also as mobile telecommunication device) being coupled to a mobile wireless cellular digital telecommunication network (referred to also as network), the mobile telecommunication device comprising a battery for powering the mobile telecommunication device, the mobile telecommunication device further comprising a processor, display device and memory, wherein the mobile telecommunication device executes at least one mobile application, the mobile application comprising instructions that, when executed on the processor, cause the processor to display on the display device a graphical user interface, the mobile telecommunication device being connected to a backend server via the network, the method comprising:
a) establishing by the mobile telecommunication device a communication link between the mobile telecommunication device and the backend server over the network;
b) sending by the mobile telecommunication device to the backend server via the established communication link a request of a first markup-language document using the graphical user interface;
c) authenticating by the backend server the mobile telecommunication device and in case of a successful authentication sending by the backend server via the established communication link the first markup-language document;
d) receiving via the communication link the first markup-language document, wherein the first markup-language document encodes first instructions that when executed on the processor cause the processor to display on the graphical user interface a data table in accordance with a first display pattern, wherein the first display pattern indicates a graphical and spatial representation of user interface elements used for displaying the data table on the graphical user interface, the user interface elements comprise selectable buttons;
e) determining using the graphical user interface that the display of the data table in accordance with the first display pattern requires at least one scrollbar on the graphical user interface; determining an amount of processing resources required for scrolling the at least one scrollbar;
   determining that at least part of the determined amount of processing resources is higher than a predetermined threshold;
   if the amount of processing resources is higher than the predetermined threshold, switching the telecommunication device into a power saving mode by executing the steps f)-i);
f) reading from the memory a second display pattern for rearranging using the second display patter the user interface elements such that the user interface elements completely fit within at least one of a width and height dimension of the display device, wherein the second display pattern involves a number of scrollbars that is smaller than the at least one scrollbar;
g) generating a second markup-language document from the first markup-language document, the second markup-language document encoding second instructions that when executed on the processor cause the processor to display the data table in accordance with the second display pattern;
h) displaying using the second markup language document the data table in the graphical user interface;
i) receiving a selection of a selectable button of the selectable buttons for requesting data from the backend server using another established communication link or the established communication link.

The term "user interface element" as used herein may be understood as a user interface object, or a set of user interface objects, displayed on a display screen of a device. A user interface element comprises a button, a text box, a tab, an icon, a text field, a pane, a check-box item, a menu bar, a title bar, an action bar or item group or the like. A user interface element may likewise be an image, a displayed alphanumeric character or any combination thereof.

The term "graphical user interface" or "user interface" as used herein refers to an interface generated by a program for display on a display screen of a device with selectable user interface elements.

The sending of the request may be performed using a network identification address of the first markup-language document. The network identification address may comprise for example a HTTP URL, FTP address etc.

The above features may have the advantage of providing an efficient access to data stored on the backend server, by for example, efficiently using the useful surface of the display device for displaying the data table on the display device. This may avoid multiple data requests to the backend server, which may save processing resources of the mobile telecommunication device such as energy that may be consumed by multiple generations and submissions of data requests. This may further have the advantage of saving network bandwidths that may be required for the submissions of the data requests and the reception of the corresponding data. This may also provide an optimal and reduced usage of the bandwidth or traffic that is assigned to the mobile telecommunication device.

The above features may further have the advantage of reducing the data traffic within a telecommunication system comprising the backend server and the mobile telecommunication device. Further, performing steps f)-i): determining an amount of processing resources required for scrolling the at least one scrollbar; determining that at least part of the determined amount of processing resources is higher than a predetermined threshold; and switching the mobile telecommunication device into a power saving mode may have the advantage of saving computing resources. For example, when scrolling the scroll bar data may be generated in order to be displayed. The generation may require resources such as energy and network bandwidths. Thus, if there are not enough resources of the mobile telecommunication device, the mobile telecommunication device may operate in a power saving mode by executing the steps f)-i) which are less resource consuming compared to the conventional display of the data table using multiple scroll bars.

The mobile application (called mobile apps) may be a stateless application. The term "stateless application" as used herein refers to an application program that does not record data generated in one session - such as information about user settings and data used to display a data table -- for use in a next session with that user. For example, a "state" may be defined as a set of conditions that exist at a given point in time. A stateless application does not record information about changes in state caused by events during a session e.g. including those caused by user interaction.

For example, the mobile application may use a stateless protocol such as an Open Data Protocol (OData) e.g. HTTP. The stateless protocol is a communication protocol that treats each request (e.g. received via the mobile application) as an independent transaction that is unrelated to any previous request so that the communication consists of independent pairs of request and one or more responses of the request. A stateless protocol does not require the stateless portal application to retain session information or status about each communications partner for the duration of multiple requests. Thus, limiting the number of sessions or connections with the backend server ma save resources that would be required for multiple transmissions of data. The mobile application may comprise a calendar application, and/or a web application.

For example, the other communication link may be a secure data link e.g. comprising a secure HyperText Transfer Protocol (HTTP) connection. This may provide a secure way for transmitting data from the backend server.

For example, the rearranging of the user interface elements may be done such that the user interface elements that are used to display the data table may fit within the width and/or the height of the graphical user interface.

For example, the authentication may be performed by for example checking if an ID of the mobile telecommunication device is locally stored at the backend server as a trusted ID i.e. the backend server can respond to requests submitted by the mobile telecommunication device having the trusted ID.

According to one embodiment, generating the second markup-language record comprises: providing one or more display arrangement templates, wherein a display arrangement template of the one or more display arrangement templates comprises a map of predefined display positions on the graphical user interface of each entry of the data table; selecting a display arrangement template of the one or more display arrangement templates whose display positons match the second display pattern; generating the second instructions for displaying entries of the data table in accordance with the display positions of the selected display arrangement template. This may provide an accurate method for placing the user interface elements in the right position according to the present method, which may further save resources of the mobile telecommunication device that would otherwise be required for dynamically calculating new positions of the graphical user interface.

According to one embodiment, the method further comprises: determining data that is used for displaying content of the data table; determining a visible portion of the determined data, wherein the visible portion is a content of a first portion of the data table that is displayable in the graphical user interface; determining a hidden portion of the determined data, wherein the hidden portion is a content of a second portion of the data table that is not displayed in the graphical user interface when the first portion of the data table is displayed; downloading the visual and hidden portions of the determined data from the backend server; upon completion of the download storing at the mobile telecommunication device the hidden and visual portions of the determined data. In existing display methods, only displayed data are transmitted from the backend server; the hidden parts e.g. of a data table may be downloaded as soon as they appear or are displayed on the graphical user interface. Thus, downloading both the hidden and the visible may further save resources required for multiple access to the hidden and visible data.

The determining of the amount of processing resources may be performed using historical data that indicate the amount of energy and/or network bandwidth for scrolling the at least one scrollbar in previous usage of the mobile telecommunication device. For example, for a given scrolling operation that involves a given portion of the graphical user interface (e.g. 10 cm in width or height) a corresponding amount of energy consumption and/or network bandwidth may be stored in the historical data. In another example, the determining of the amount of processing resources may be performed using simulation data based on a model of the mobile telecommunication device as described above.

According to one embodiment, the processing resources comprise at least one of: a network bandwidth; and energy consumption.

According to one embodiment, the threshold is determined from at least one of: a remaining battery lifetime of the battery; a maximum network bandwidth assigned to the mobile telecommunication.

According to one embodiment, the processor operates in a processor power saving mode when the mobile telecommunication device is switched into the power saving mode, wherein the processor operates at a first clock frequency when the processor operates in the processor power saving mode, wherein the processor operates at a second clock frequency when the processor operates not in the processor power saving mode, wherein the second clock frequency is higher than the first clock frequency.

According to one embodiment, the processor operates in a processor power saving mode when the mobile telecommunication device is switched into the power saving mode, wherein the processor comprises one or more cores, wherein at least one core of the processor is in standby mode when the processor operates in the processor power saving mode, wherein the at least one core of the at least one processor is not in standby mode when the processor operates not in the processor power saving mode.

According to one embodiment, the at least one scrollbar comprises a horizontal and vertical scrollbars wherein the second display pattern involves a vertical scrollbar. For example, the second display pattern may involve the vertical scrollbar only. This may for example save processing time to access the data table i.e. instead of scrolling in two directions only one scrolling direction is used.

According to one embodiment, the method further comprises receiving a selection of a data row of the data table using a button of the selectable buttons; wherein the second instructions are generated such that when executed cause the processor to display the selected data row only in accordance with the second display pattern. This may further save resources as only required data rows are displayed. Usually users may only require access to part of the data tables. The present method may make use of that partial usage of the data table to optimize the display and thus save resources of the mobile telecommunication device.

For example, upon receiving the first markup-language document the data table may be displayed using the first display pattern such that a user of the mobile telecommunication device may select the data row. In another example, the selection of the data row may be received automatically from a monitoring unit of the mobile telecommunication device; wherein the monitoring unit comprises data indicative of the data row e.g. as being associated with the user of the mobile telecommunication device.

According to one embodiment, the method further comprises deleting from the mobile telecommunication device data related to non-selected data rows of the data table. For example, part of the stored hidden and visible data may be deleted if it is not used for displaying the selected data row. This may save storage resources at the mobile telecommunication device.

In another aspect, the invention relates to a computer program product comprising computer executable instructions to perform the method steps of the method of any one of the preceding embodiments.

In another aspect, the invention relates to a handheld mobile telecommunication device, the handheld mobile telecommunication device being coupled to a mobile wireless cellular digital telecommunication network, the mobile telecommunication device comprising a battery for powering the mobile telecommunication device, the mobile telecommunication device further comprising a processor, display device and memory, wherein the mobile telecommunication device executes at least one mobile application, the mobile application comprising instructions that, when executed on the processor, cause the processor to display on the display device a graphical user interface, the mobile telecommunication device being connected to a backend server via the network, the mobile telecommunication device being configured for:
- establishing a communication link between the mobile telecommunication device and the backend server over the network;
- sending to the backend server via the established communication link a request of a first markup-language document using the graphical user interface;
- receiving via the communication link the first markup-language document, wherein the first markup-language document encodes first instructions that when executed on the processor cause the processor to display on the graphical user interface a data table in accordance with a first display pattern, wherein the first display pattern indicates a graphical and spatial representation of user interface elements used for displaying the data table on the graphical user interface, the user interface elements comprise selectable buttons;
- determining using the graphical user interface that the display of the data table in accordance with the first display pattern requires at least one scrollbar on the graphical user interface; determining an amount of processing resources required for scrolling the at least one scrollbar;
   determining that at least part of the determined amount of processing resources is higher than a predetermined threshold;
   if the amount of processing resources is higher than the predetermined threshold, switching the telecommunication device into a power saving mode by executing the following steps:
   - reading from the memory a second display pattern for rearranging the user interface elements such that the user interface elements completely fit within at least one of a width and height dimension of the display device, wherein the second display pattern involves a number of scrollbars that is smaller than the at least one scrollbar;
- generating a second markup-language document from the first markup-language document, the second markup-language document encoding second instructions that when executed on the processor cause the processor to display the data table in accordance with the second display pattern;
- displaying using the second markup language document the data table in the graphical user interface;
- receiving a selection of a selectable button of the selectable buttons for requesting data from the backend server using another established communication link.

In another aspect the invention relates to a telecommunication system comprising a mobile telecommunication device and a backend server according to above embodiments, wherein the backend server is configured for authenticating the mobile telecommunication device and in case of a successful authentication sending via the established communication link the first markup-language document.

In another aspect, the invention relates to a method comprising: maintaining a stateful session between a presentation server process and a backend data processing system process on behalf of a device app; receiving, within the stateful session, a first message from the backend data processing system, the first message including a dataset having rows of data organized in columns; identifying a presentation template to be used in generating a view of the dataset of the first message; transforming the dataset of the first message to a format renderable within the identified presentation template; generating a second message including at least a portion of the transformed dataset; within the stateful session, maintaining a representation of the second message; and transmitting the second message, via a network, to the device app.

According to one embodiment, the first message further includes a presentation template identifier; and identifying the presentation template includes identifying the presentation template based at least in part on the presentation template identifier.

According to one embodiment, wherein transforming of the dataset of the first message to the format renderable within the identified presentation template includes generating a markup language representation of at least some data columns of each row of data included in the dataset of the first message.

According to one embodiment, transformation the dataset of the first message to the format renderable within the identified presentation template further includes applying a formatting template, the application of which specifies, within the generated markup language representation, formatting properties with regard to presentation of at least data column when rendered according to the identified presentation template.

According to one embodiment, formatting properties with regard to presentation of data columns not specified in the formatting template are formatted according to default formatting properties of the identified presentation template when rendered according to the identified presentation template.

According to one embodiment, the identified presentation template includes a set of named cells within which data is presentable; generating the markup language representation of at least some data columns of each row of data included in the dataset of the first message includes mapping, in the markup language representation, each of the at least some data columns to a named cell of the identified presentation template; and the identified presentation template is a row template, which when rendered, is rendered a number of times equal to a number of rows included in the dataset of the first message.

According to one embodiment, cells of the set of named cells of the presentation template that do not include a mapped data column within the markup language representation are omitted from a visual rendering generated based on the second message and the identified presentation template.

In another aspect, the invention relates to a non-transitory computer-readable medium, with instructions stored thereon, which when executed by at least one processor of a computing device, cause the computing device to: receive, via a network from a presentation server, a message including a dataset having rows of data organized in columns, the rows of data received in a format presentable within a presentation template; identify and retrieve a presentation template; populate the retrieved presentation template with data from the received message; format data populated into the retrieved presentation template according to formatting property data included in the received message; and present, on a display device, the presentation template populated with data.

According to one embodiment, data populated into the retrieved presentation template for which formatting data is not applied is formatted according to formatting properties of the presentation template.

According to one embodiment, the non-transitory computer-readable medium further comprises: receive event input, the event input received with regard to a data element included in the presentation of the template populated with data; generate and transmit, via the network, a request including an identifier of the event and a representation of the data element that was received with regard to the event input; receive, in response to the request, a second message including a dataset having a single row of data organized in columns, the single row of data received in a format presentable in a second presentation template.

According to one embodiment, the non-transitory computer-readable medium further comprises identify and retrieve a second presentation template from the data storage; populate the retrieved second presentation template with data from the received second message; and present, on the display device, the presentation second template populated with data from the received second message.

According to one embodiment, the presentation template is retrieved from the non-transitory computer-readable medium.

According to one embodiment, the non-transitory computer-readable medium stores a plurality of presentation templates, each presentation template including a template identifier; and data of the received message includes a template identifier of the presentation template to identify and retrieve.

According to one embodiment, the non-transitory computer-readable medium is a non-volatile memory of a computing device.

In another aspect, the invention relates to a system comprising: at least one processor; at least one memory; at least one network interface; and an instruction set accessible in the memory and executable by the at least one processor to: maintain a stateful network session between the system and a backend data processing system process on behalf of a device app; receive, via the at least one network interface within the stateful network session, a first message from the backend data processing system, the first message including a dataset having rows of data organized in columns; identify a presentation template to be used in generating a view of the dataset of the first message; transform the dataset of the first message to a format renderable within the identified presentation template; generate a second message including at least a portion of the transformed dataset; within the stateful network session, maintain a representation of the second message; and transmit the second message, via a network, to the device app.

### BRIEF DESCRIPTION OF THE DRAWINGS

FIG. 1 is a logical block diagram of a system, according to an example embodiment.
FIG. 2 is a logical block diagram of a system, according to an example embodiment.
FIG. 3 illustrates an example portion of a presentation template, according to an example embodiment.
FIG. 4 illustrates a page including a rendering of a plurality of presentation template portions, according to an example embodiment.
FIG. 5 is a block flow diagram of a method, according to an example embodiment.
FIG. 6 is a block flow diagram of a method, according to an example embodiment.
FIG. 7 is a block diagram of a computing device, according to an example embodiment.
FIG. 8 schematically depicts a telecommunication system according to the present disclosure.
FIG. 9 is a flowchart of a method of operating a mobile telecommunication device.

### DETAILED DESCRIPTION

Various embodiments herein include one or more of systems, method, software, and data structures that are utilized in presenting rows of data within user interfaces of mobile devices. Some such embodiments can be considered as spanning three layers of a technical data processing infrastructure: 1) a backend data processing system of an enterprise, such as an enterprise resource planning (ERP), customer relationship management (CRM), a user system such as may provide multiple data views of various products offered by an enterprise, and the like; 2) a presentation server that operates between the backend system and mobile devices of users to maintain stateful network sessions there between, to transform data of the backend system into mobile device presentation-friendly forms, and to proxy data processing requests from mobile devices to the backend system; and 3) mobile devices that present data to users and receive input with regard to data and data processing activities.

The mobile devices as described and illustrated herein include tablet computing devices, smartphones, handheld computing devices, and the like. However, mobile devices may also include apps that execute within web browsers, set-top boxes that connect to televisions, monitors, or other display devices, smart controllers within automobiles or home appliances, and other devices that are enabled to execute apps.

As mentioned above, a presentation server operates between a backend system and mobile devices of users. The presentation server in such embodiments is enabled to communicate with processes of the backend system to establish stateful data processing sessions with the backend system upon request from apps that execute on mobile devices. The presentation server includes presentation templates, stored in the presentation server or a template repository. The presentation templates include mappings between forms of data that are received from the backend system and how the data is to be presented within a mobile device app. Similarly, presentation templates may also include mappings between mobile device app events, such as data requests, data processing requests (i.e., show detail data, purchase a product, retrieve data, etc.) and processes, functions, services, and objects of the backend system. The mappings provide instructions to transform data, transform data requests, and perform other transforms of particular embodiments.

Typically, a presentation template stored by the presentation server or in a template repository includes an analog template that is present within a mobile device app or is retrievable thereby, such as from the template repository, or as may be provided to a mobile device app by the presentation server. A presentation template includes a generic user interface presentation structure including named fields that can be populated with data. The generic user interface presentation structure may be defined for presentation of a single row of data. Thus, when multiple rows of data are to be presented, multiple instances of the generic user interface presentation structure are instantiated and populated with data within a mobile device app.

A presentation template, in some embodiments, includes a default set of formatting properties for presentation of data within the named cells of the generic user interface presentation structure. Such formatting properties, for example, may include horizontal and vertical alignment properties, bold and italic text properties, font size and color properties, and other such formatting properties. In some embodiments, the default formatting properties of a presentation template may be overridden by formatting data included in a dataset received by a mobile device app from the presentation server. In such embodiments, the presentation server version of the presentation template, which is generally identical to the presentation template present within the mobile device app but includes the mappings and other elements as discussed previously, may include formatting property mappings. Thus, in a dataset provided by the presentation server to a mobile device app, the dataset may include formatting properties that will override any default formatting properties present in the presentation template of the mobile device app.

In a typical scenario, a mobile device app will connect to the presentation server over a network and request data. For example, the mobile device app may be an app data monitoring through which users may request data used for communications between two systems on a given day. The mobile device app may receive input within a user interface where the input identifies a date and two systems. The mobile device app transmits a representation of that data, via the network such as the Internet, to the presentation server in the form of a request. The presentation server, upon receipt of the request, may determine transforms that are needed according to a template associated with the request type. The transforms performed may include transforming a text form of the date to a DATE data form, among other possible data transformations. Based on the template associated with the request type, the presentation server also is able to identify a process, function, service, object, or other data processing element or structure to call within the backend system that is to process the request. The presentation server then transmits the request to the backend system and receives a response thereto. The backend system processes the request according to the called data processing element or structure, which is also typically the same data processing element or structure that may be called by other client applications or processes within the backend system. Thus, the presentation server and the presentation templates, among other things, enable development of mobile device apps that leverage existing backend system data processing processes and infrastructure and to minimize a number backend system data processing processes and infrastructure elements that perform similar or identical functions.

Continuing with this example, the presentation server, upon receipt of the response to the transformed request sent to the backend system, receives a dataset including data representative of communications between the two systems on the specified date. This will typically include multiple rows of data - a row for each communication, each row including data representative of a start time and an end time of the given communication. The data for each row may include additional data, such as amount of resources e.g. network bandwidth of the respective communication, and other such data. The presentation server, based on the received data and, in some embodiments, the requesting mobile device app, identifies a presentation template to apply to the received data. The presentation template is then applied and a message including the transformed data is generated. The message, in some embodiments, includes data encoded according to a format parsable by the mobile device app. For example, the data may be encoded in a markup language, such as extensible markup language (XML). The encoded data is encoded according to not only data transformations of the presentation template, but also to associate columns of data to named fields of a generic user interface presentation structure of the presentation template and to add any formatting properties that may be included in the presentation template used by the presentation server. The message is then transmitted to the mobile device app.

The mobile device app, upon receipt of the message include the requested data identifies and retrieves the presentation template within which the data is to be presented. The encoded data of the message is then parsed, extracted, and populated into the generic user interface presentation structure of the template. The data is then formatted according to any formatting data included in the message and according to default formatting properties that may be included in the presentation template. In some embodiments, the mobile device app may perform additional processing or formatting of the data to be presented or the presentation template according to specific properties of the mobile device on which the mobile device app is present. For example, the display of the mobile device may be of a resolution that allows for or may benefit from presentation of the data in a different manner. The mobile device app may be developed to account for such device-specific properties. The data may then be presented on a display of the mobile device.

These and other embodiments are described herein with reference to the figures.

In the following detailed description, reference is made to the accompanying drawings that form a part hereof, and in which is shown by way of illustration specific embodiments in which the inventive subject matter may be practiced. These embodiments are described in sufficient detail to enable those skilled in the art to practice them, and it is to be understood that other embodiments may be utilized and that structural, logical, and electrical changes may be made without departing from the scope of the inventive subject matter. Such embodiments of the inventive subject matter may be referred to, individually and/or collectively, herein by the term "invention" merely for convenience and without intending to voluntarily limit the scope of this application to any single invention or inventive concept if more than one is in fact disclosed.

The following description is, therefore, not to be taken in a limited sense, and the scope of the inventive subject matter is defined by the appended claims.

The functions or algorithms described herein are implemented in hardware, software or a combination of software and hardware in one embodiment. The software comprises computer executable instructions stored on computer readable media such as memory or other type of storage devices. Further, described functions may correspond to modules, which may be software, hardware, firmware, or any combination thereof. Multiple functions are performed in one or more modules as desired, and the embodiments described are merely examples. The software is executed on a digital signal processor, ASIC, microprocessor, or other type of processor operating on a system, such as a personal computer, server, a router, or other device capable of processing data including network interconnection devices.

Some embodiments implement the functions in two or more specific interconnected hardware modules or devices with related control and data signals communicated between and through the modules, or as portions of an application-specific integrated circuit. Thus, the exemplary process flow is applicable to software, firmware, and hardware implementations.

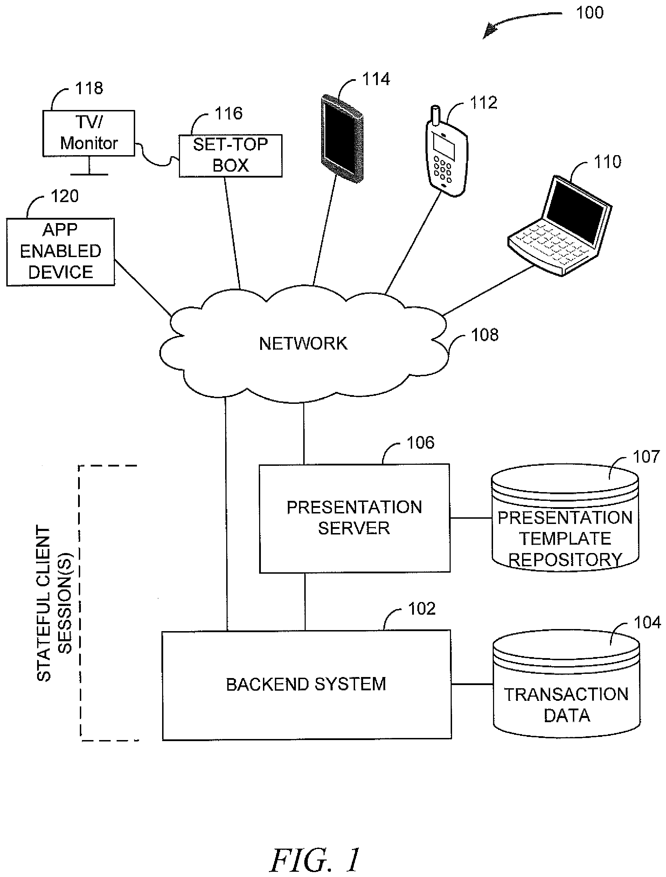

FIG. 1 is a logical block diagram of a system 100, according to an example embodiment. The system 100 is an example computing environment within which various embodiments may be implemented.

The system 100 includes a backend system 102 of an enterprise, such as one or more of an enterprise resource planning (ERP), customer relationship management (CRM), human resources management (HRM), a transaction processing system, a user system such as may provide multiple data views of various products offered by an enterprise, an order and order processing system, a banking system, and the like. The backend system 102 stores and processes transaction data 104 as may be stored in a database, data files, and other data storage processes and devices.

The backend system 102 may be deployed to one or more computing devices, such as one or more enterprise-class server computers, virtual machines, and the like. The backend system 102 may be accessed by other systems and programs that execute and various computing devices throughout the system 100. For example, the backend system 102 may be accessed via a network 108 by thick-client or thin-client applications as may be deployed to personal computers 110, by other software systems, and other clients. The backend system 102 may also be accessed by a presentation server 106 either directly or via the network 108.

As discussed above, the presentation server 106 operates in the networked environment of the system 100 between the backend system 102 and mobile devices 112, 114, 116, 120 of users, although the presentation server 106 may also operate with web browser apps as may be deployed to web browser applications of personal computers 110 and other computing devices.. The presentation server 106 in such embodiments communicates with processes of the backend system 102 to establish stateful data processing sessions with the backend system 102 upon request from apps that execute on mobile devices 112, 114, 116, 120. The presentation server 106 may be deployed as an add-on module to the backend system 102 and operate on the same or different hardware thereof, in some embodiments. However, in other embodiments, the presentation server 106 may be deployed as a standalone program that executes on one or more distinct computing devices or virtual machines from the backend system 102. In some embodiments, the presentation server 106 is hosted by a third party, such as in a cloud-computing type arrangement.

The presentation server 106 includes presentation templates, stored in the presentation server 106 or a template repository 107. The presentation templates include mappings between forms of data that are received from the backend system 102 and how the data is to be presented within a mobile device 112, 114, 116, 120 app. Similarly, presentation templates may also include mappings between mobile device 112, 114, 116, 120 app events, such as data requests, data processing requests (i.e., show detail data, purchase a product, retrieve data, etc.) and processes, functions, services, and objects of the backend system 102. The mappings provide instructions to transform data, transform data requests, and perform other transforms of particular embodiments.

The network 108 is generally a network capable of transporting data between computing devices of the various functional data processing elements of the system 100, such as the backend system 102, the presentation server 106, personal computers 110 and the various mobile devices 112, 114, 116, 120. The network 108 may include both wired and wireless connections. The network 108 is intended to represent one or more of virtually any type of network capable of transporting data as described, such as one or more of a local area network, a wide area network, a system area network, a value added network, a virtual private network, the Internet, and other such networks.

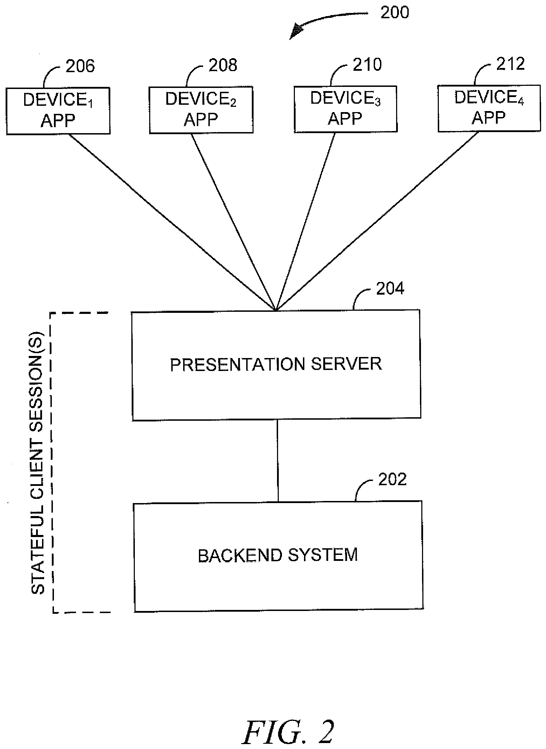

FIG. 2 is a logical block diagram of a system 200, according to an example embodiment. The example embodiment includes a plurality of device apps₁₋₄ 206, 208, 210, 212. Although there are four device apps illustrated, other embodiments may include one, two, three, or more device apps. Each device app 206, 208, 210, 212 is generally an instance of the same app, although each device app 206, 208, 210, 212 is tailored for a different device-type, such as devices being different of one or more of different operating systems, different component types (e.g., operating system or version, display sizes and resolutions, input devices, processing power, bandwidth speeds, etc.).

As described above, each device app 206, 208, 210, 212 may include or have access to presentation templates to use in presenting data received from a presentation server 204. While the presentation templates include data, including a generic user interface presentation structure having named fields that can be populated with data of a single row of data and can be instantiated a number of times within a user interface equal to a number of rows of data to be presented, the presentation templates, being generic, are not necessarily tailored to the specific device on which the device app 206, 208, 210, 212 is deployed. Thus, each device app 206, 208, 210, 212 may include tailoring options, added when the mobile device app 206, 208, 210, 212 is developed or later by a download of data. The tailoring options may tailor specific presentation templates or may tailor presentation templates generally to allow for better presentation of data within presentation templates. For example, such tailoring may be performed to accommodate for a width or resolution of a display of a particular mobile device. Other tailoring may also, or alternatively, be provided for.

The presentation server 204 operates between a backend system 202 and devices on which the device apps 206, 208, 210, 212 are deployed. The presentation server 204 communicates with processes of the backend system 202 to establish stateful data processing sessions with the backend system 202 upon request from one of the device apps 206, 208, 210, 212. The presentation server 204 includes the presentation templates, which may be stored in the presentation server 204 or a template repository, such as template repository 107 of FIG. 1. The presentation templates include mappings between forms of data that are received from the backend system 202 and how the data is to be presented within the device apps 206, 208, 210, 212. Similarly, presentation templates may also include mappings between device apps 206, 208, 210, 212 events, such as data requests, data processing requests (i.e., show detail data, purchase a product, retrieve data, etc.) and processes, functions, services, and objects of the backend system. The mappings provide instructions the presentation server for transforming data, transforming data requests, and performing other transforms of particular embodiments.

The stateful data processing sessions between the presentation server 204 and the backend system 202 are maintained while a device app 206, 208, 210, 212 is viewing or manipulating data, although such sessions may timeout after a period of inactivity. The stateful data sessions are stateful in the sense that a presentation server may hold certain types of transactions open while awaiting further input from a device app 206, 208, 210, 212, such as to purchase a presented product, the provisioning of payment data, to await confirmation input before committing data manipulation (i.e., create, update, or delete), and the like.

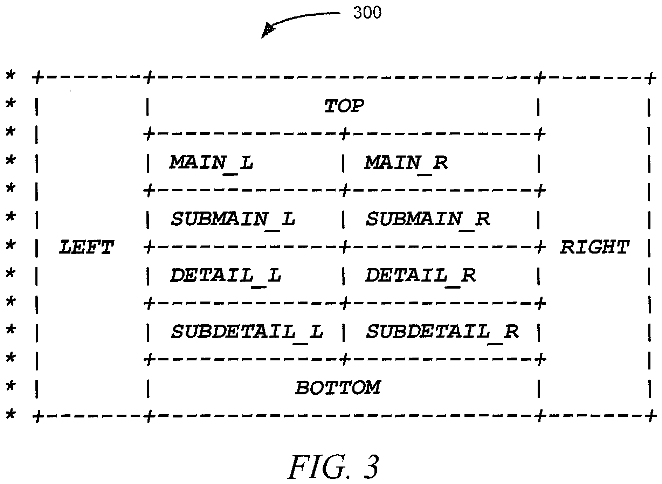

FIG. 3 illustrates an example portion 300 of a presentation template, according to an example embodiment. The example portion 300 of the presentation template illustrates an example generic user interface presentation structure including named fields that can be populated with data. The generic user interface presentation structure may be defined for presentation of a single row of data. Thus, when multiple rows of data are to be presented, multiple instances of the generic user interface presentation structure are instantiated and populated with data within a device app. The generic user interface presentation structure includes named fields as follows:
LEFT
RIGHT
TOP
MAIN_L
MAIN_R
SUBMAIN_L
SUBMAIN_R
DETAIL_L
DETAIL_R
SUBDETAIL_L
SUBDETAIL_R
BOTTOM

Each of the named fields is a field that can receive and present data when instantiated within a user interface. When a device app receives data from presentation server, the received data may identify a presentation template within which to present data of the message and a mapping of data elements of the message to named fields of a generic user interface presentation structure of the identified presentation template, such as is illustrated in FIG. 3. However, in some embodiments, a received message may not identify a presentation template. In such instances, the device app will identify a presentation template based on one or more factors, such as may be based on the received data, a process from which the data originated in the backend system, a particular presentation server or process thereof from which the message was received, a configuration setting of the device app, tailoring data of the device app, and other factors.

The presentation template of which the illustrated generic user interface presentation structure is a part of may include default data mapping and formatting specifications that will be applied to received data when a message including the data does not specify one or both of a mapping of data elements the named fields or formatting properties. An example of such data mapping and formatting specifications is provided in TABLE 1. For example, data columns included in an encoded dataset are received in an order, such as within a dataset encoded according to an XML schema. The first data column is mapped to named field MAIN_L of the illustrated generic user interface presentation structure of FIG. 3. The font size and style in that named field is BIG and BOLD. However, when a received message includes equivalent data of TABLE 1, the data included in the message will override the default data when the data is rendered within the generic user interface presentation structure. Additionally, in instances where a message does not include data to populate all fields, the non-populated fields of the generic user interface presentation structure typically will not be presented.

**TABLE 1**

| DATA COLUMN | POSITION | FONTSIZE | FONTSTYLE |
|---|---|---|---|
| 1 | MAIN_L | BIG | BOLD |
| 2 | MAIN_R | BIG | BOLD |
| 3 | SUBMAIN_L | MEDIUM | NORMAL |
| 4 | SUNMAIN_R | MEDIUM | NORMAL |
| 5 | DETAIL_L | SMALL | NORMAL |
| 6 | DETAIL_R | SMALL | NORMAL |
| 7 | SUBDETAIL_L | SMALL | NORMAL |
| 8 | SUBDETAIL_R | SMALL | NORMAL |
| 9 | TOP | BIG | BOLD |
| 10 | BOTTOM | BIG | NORMAL |
| 11 | LEFT | BIG | BOLD |
| 12 | RIGHT | BIG | NORMAL |

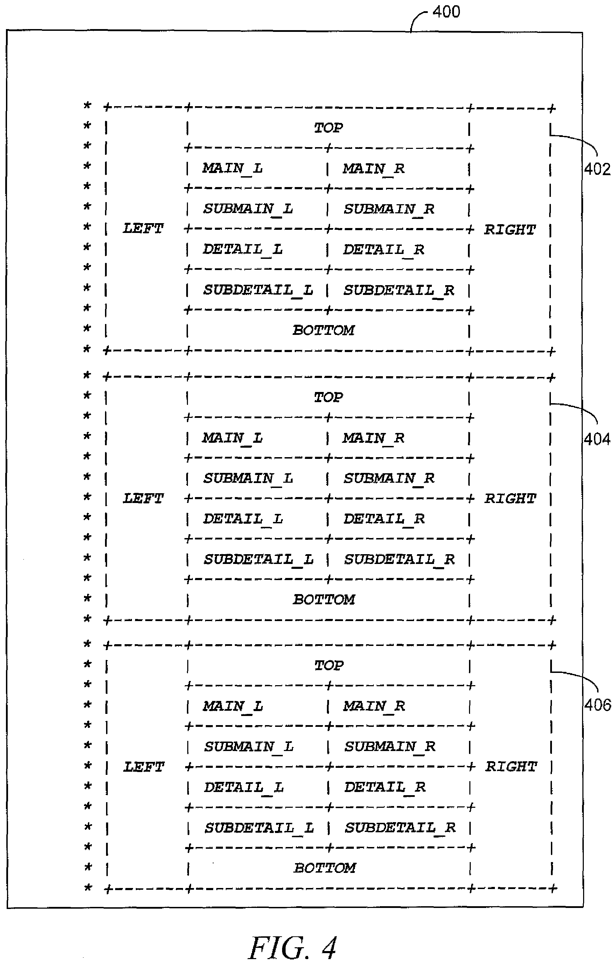

Additionally, the data of TABLE 1, or equivalent data of another presentation template with regard to another generic user interface presentation structure, or data as specified in a message received from a presentation server, may include additional columns. For example, another column may be included to specify a control type, data options to be presented in the control type, and labels for each of the different options. For example, a control column may specify a drop-down-list-box and the options may specify YES, NO, MAYBE. The control of that type would then be rendered at an appropriate time with the YES, NO, MAYBE options included therein. FIG. 4 illustrates a page 400 including a rendering of a plurality of presentation template portions, according to an example embodiment. More specifically, the page is a device app user interface within which multiple example portions 300 of the presentation template described in FIG. 3 are illustrated, such as will happen when a message received from a presentation server by a device app includes a plurality of data rows. As illustrated, each of illustrated portions 402, 404, 406 are instances of the generic user interface presentation structure illustrated in FIG. 3. Each portion 402, 404, 406 will present a row of received data and will be formatted, such as according to the mapping and formatting included in TABLE 1 above.

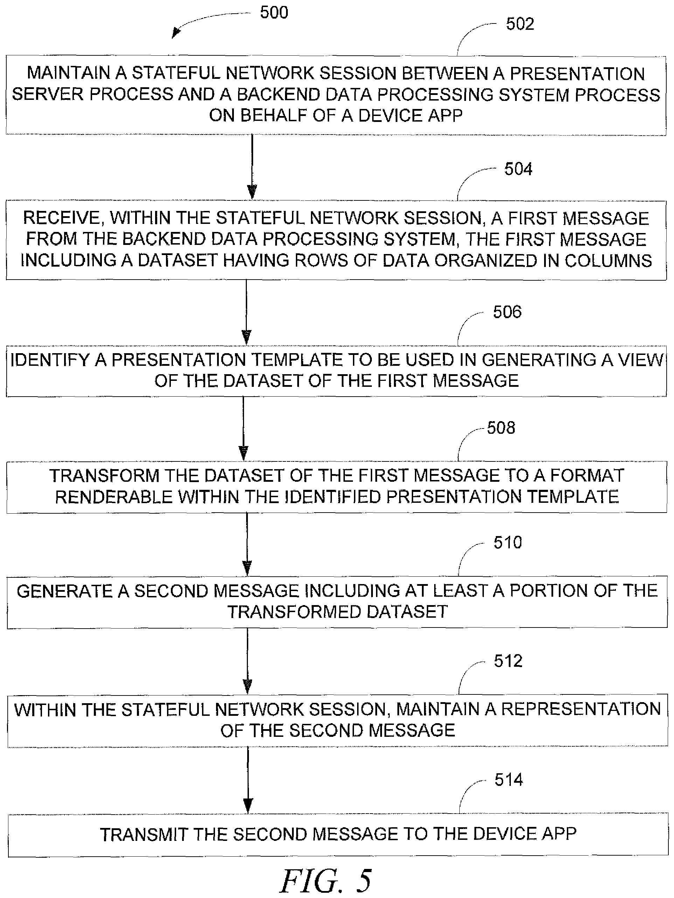

FIG. 5 is a block flow diagram of a method 500, according to an example embodiment. The method 500 is an example of a method that may be performed by a presentation server 106 of FIG. 1 or 204 of FIG. 2. The method 200 includes maintaining 502 a stateful session between a presentation server process and a backend data processing system process on behalf of a device app. The method 500 may then receive 504, within the stateful session, a first message from the backend data processing system. The received 504 first message includes a dataset having rows of data organized in columns. The method 500 may then identify 506 a presentation template to be used in generating a view of the dataset of the first message and transform 508 the dataset to a format renderable within the identified presentation template. The method 500 may then generate 510 a second message including at least a portion of the transformed dataset and transmit 514 the second message, via a network, to the device app. In some embodiments, the method may maintain 512, within the stateful session, a representation of the second message.

In some embodiments of the method, the first message is received 504 with a presentation template identifier. When the first message includes the presentation template identifier, the method 500 identifies 506 the presentation template based at least in part on the presentation template identifier.

In a further embodiment of the method 500, transforming 508 the dataset of the first message to the format renderable within the identified presentation template includes generating a markup language representation of at least some data columns of each row of data included in the dataset of the first message. The markup language, in some embodiments, is XML. In other embodiments, the markup language is a proprietary markup language while in other embodiments, the markup language is another open standards-based markup language.

In yet another embodiment, the transforming 508 of the dataset of the first message to the format renderable within the identified presentation template further includes applying a formatting template. Application of the formatting template specifies, within the generated markup language representation, formatting properties with regard to presentation of at least data column when rendered according to the identified presentation template.

In some such embodiments, and others, the identified 506 presentation template includes a set of named cells within which data is presentable, such as is illustrated in FIG. 3. Further, generating the markup language representation of at least some data columns of each row of data included in the dataset of the first message includes mapping, in the markup language representation, each of the at least some data columns to a named cell of the identified presentation template. The presentation template in such embodiments, may be a row template, which when rendered, is rendered by a device app a number of times equal to a number of rows included in the dataset of the first message.

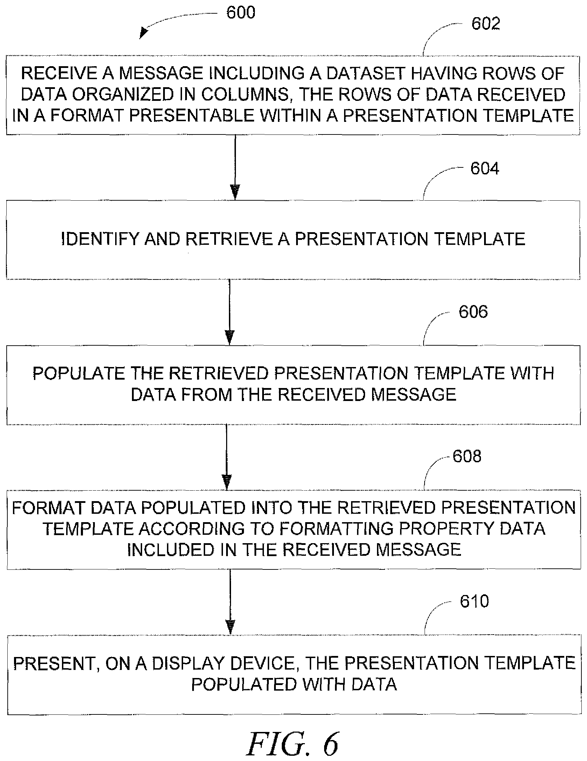

FIG. 6 is a block flow diagram of a method 600, according to an example embodiment. The method 600 is an example of a method that may be performed by a device app.

The method 600 includes receiving 602, via a network from a presentation server, a message including a dataset having rows of data organized in columns. The rows of received data are received in a format presentable within a presentation template, such as may be provided in a markup language message. The method 600 may then identify and retrieve 604 a presentation template to be used in presenting a view of the received data. The template may be retrieved from memory of a device on which an app performing the method may execute, such as may be included in data of the app, or may be retrieved from another data storage location, such as the presentation server.

The method 600 may then populate 606 the retrieved presentation template with data from the received message and format 608 the data populated into the retrieved presentation template according to formatting property data included in the received message. The method 600 then presents 610, on a display of the device, the presentation template populated with data.

After the presentation template populated with data is presented, the method 600 may further include receiving event input with regard to a presented data element. The method 600 may then generate and transmit, via the network, a request including an identifier of the event, such as a selection for a view of detail data, and a representation of the data element that was received with regard to the event input. The method 600 then receives, in response to the request, a second message including a dataset having a single row of data organized in columns, the single row of data received in a format presentable in a second presentation template.

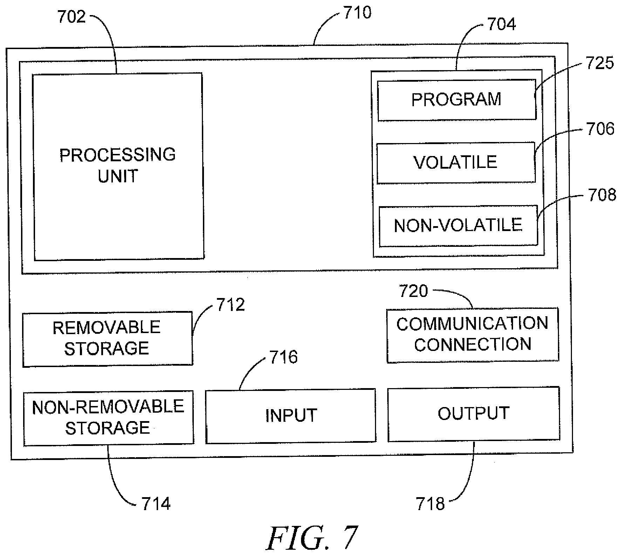

FIG. 7 is a block diagram of a computing device, according to an example embodiment. In one embodiment, multiple such computer systems are utilized in a distributed network to implement multiple components in a transaction-based environment. An object-oriented, service-oriented, or other architecture may be used to implement such functions and communicate between the multiple systems and components.

One example computing device in the form of a computer 710, may include a processing unit 702, memory 704, removable storage 712, and non-removable storage 714. Although the example computing device is illustrated and described as computer 710, the computing device may be in different forms in different embodiments. For example, the computing device may instead be a smartphone, a tablet, or other computing device including the same or similar elements as illustrated and described with regard to FIG. 7. Further, although the various data storage elements are illustrated as part of the computer 710, the storage may also or alternatively include cloud-based storage accessible via a network, such as the Internet.

Returning to the computer 710, memory 704 may include volatile memory 706 and non-volatile memory 708. Computer 710 may include - or have access to a computing environment that includes a variety of computer-readable media, such as volatile memory 706 and non-volatile memory 708, removable storage 712 and non-removable storage 714. Computer storage includes random access memory (RAM), read only memory (ROM), erasable programmable read-only memory (EPROM) & electrically erasable programmable read-only memory (EEPROM), flash memory or other memory technologies, compact disc read-only memory (CD ROM), Digital Versatile Disks (DVD) or other optical disk storage, magnetic cassettes, magnetic tape, magnetic disk storage or other magnetic storage devices, or any other medium capable of storing computer-readable instructions. Computer 710 may include or have access to a computing environment that includes input 716, output 718, and a communication connection 720. The input 716 may include one or more of a touch-screen, touchpad, mouse, keyboard, camera, and other input devices. The computer may operate in a networked environment using a communication connection 720 to connect to one or more remote computers, such as database servers, web servers, and other computing device. An example remote computer may include a personal computer (PC), server, router, network PC, a peer device or other common network node, or the like. The communication connection 720 may be a network interface device such as one or both of an Ethernet card and a wireless card or circuit that may be connected to a network. The network may include one or more of a Local Area Network (LAN), a Wide Area Network (WAN), the Internet, and other networks.

Computer-readable instructions stored on a computer-readable medium are executable by the processing unit 702 of the computer 710. A hard drive (magnetic disk or solid state), CD-ROM, and RAM are some examples of articles including a non-transitory computer-readable medium. For example, various computer programs or apps, such as one or more applications and modules implementing one or more of the methods illustrated and described herein or an app or application that executes on a mobile device or is accessible via a web browser, may be stored on a non-transitory computer-readable medium.

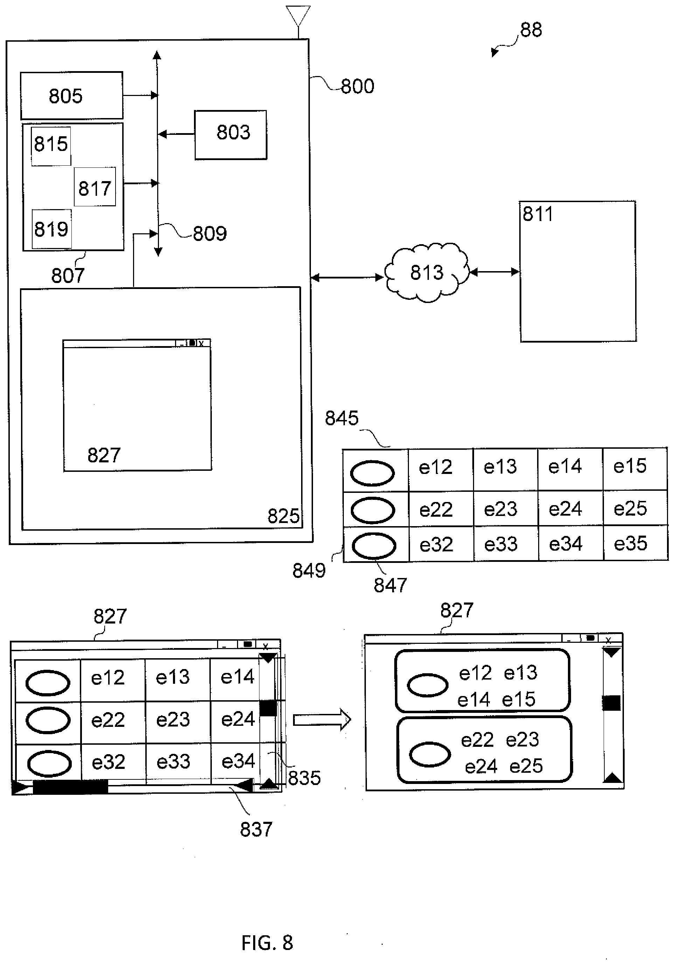

Fig. 8 shows an exemplary mobile telecommunication device 800 (such as client device 102, 104 or 106) for a telecommunication system 88 (such as system 100 of Fig. 1). The telecommunication system 88 may comprise, for example, a cellular digital telecommunication system. The mobile telecommunication device 800 may comprise a processor 803, a transceiver 805, a memory 807 (e.g. a main memory) each capable of communicating with one or more components of the mobile telecommunication device 800. For example, all components are coupled to a bidirectional system bus 809. The mobile telecommunication device 800 further comprises a cache 817. Although, the cache 817 is shown as a portion of the memory 807, it may be separate from the memory 807 as a separate memory cache component (e.g. SRAM).

The processor 803 may be a microprocessor, a single core processor, a multicore processor or the like. The processor 803 may control the operation of the mobile telecommunication device 800. The transceiver 805 may be implemented as a transmitting and receiving component of the mobile telecommunication device 800. The mobile telecommunication device 800 may further comprise a display device 825 which displays characters and images and the like. For example, the display device 825 may be a touch sensitive display screen.

For example, the mobile telecommunication device 800 may be powered by a battery. The battery may be a rechargeable battery, which may be recharged using a power transfer means such as a connector.

The mobile telecommunication device 800 may be connected to a backend server 811 (e.g. 102 of FIG. 1 or 202 of FIG. 2) through a network 813 such as a mobile wireless cellular digital telecommunication network. The backend server 811 may be a computer system.

For example, the mobile telecommunication device 800 may be directly connected to the backend server 811 or via a base station (not shown) of the cellular-digital wireless telecommunication system. For that, the mobile telecommunication device may for example establish a communication link over the network 813 with the backend server 811.

Using the transceiver 805, the mobile telecommunication device 800 may exchange data with the backend server 811 via the network 813. For example, the network 813 may comprise any number and combination of networks.

The mobile telecommunication device 800 may be assigned a predefined network bandwidth e.g. 300 MB per month. The assignment may be performed by a network operator of the telecommunication system 88.

The backend server 811 may have control access to one or more databases containing data tables such as data table 845. The data table 845 may have rows 847.1-3 of data organized in columns 849.1-5. Each data row e.g. 845.1 of the data rows may comprise entries e.g. e12, e13, e14 and e15. The entries of a given data row may be attributes values of a common parameter. An entry (e.g. the first entry 847 of a data row 849) of the entries may be represented as a selectable button 847 on the graphical user interface 827. Upon receiving a selection of a selectable button (e.g. 847) detailed information may be displayed on the graphical user interface. The detailed information describes at least part of the entries of the data row 849. The parameter may indicate for example an electronic device, wherein the attribute values may indicate for examples properties of the electronic device such as the size, the powering mode used by the electronic device etc. Thus the order in which the entries are stored or displayed in a given data row may be arbitrary. The present method may facilitate the rearrangement or redisplaying of the entries compared to the case where the entries may be constrained to a given encoding order.

For example, the entries e12 and e13 may be strings "size" and "power mode" respectively. By selecting the selectable button 847 details about the size and the power mode may be displayed on the graphical user interface 827. For example, by tapping the selectable button once the details of the first neighboring entry "size" may be displayed, and by tapping twice (with a tapping frequency smaller than a tapping frequency threshold e.g. 1Tap/1s) the selectable button the details of the second neighboring entry i.e. "operation mode" may be displayed, and by tapping the selectable button three times the details of the third neighboring entry may be displayed and so on. Thus, the display of the selectable button 847 may be required in order to get the detailed information. However, the selectable button may be hidden when using the conventional method. The present method may prevent this issue as described below.

Memory 807 is configured to store one or more mobile applications that are executable on the processor 803. Memory 807 may further comprise a control unit 819. A mobile application 815 of the one or more mobile applications comprises instructions that, when executed by the processor 803, cause the processor 803 to generate on the display device 825 a graphical user interface 827. The mobile application 815 may comprise for example, a web application, a browser, or a calendar application etc.

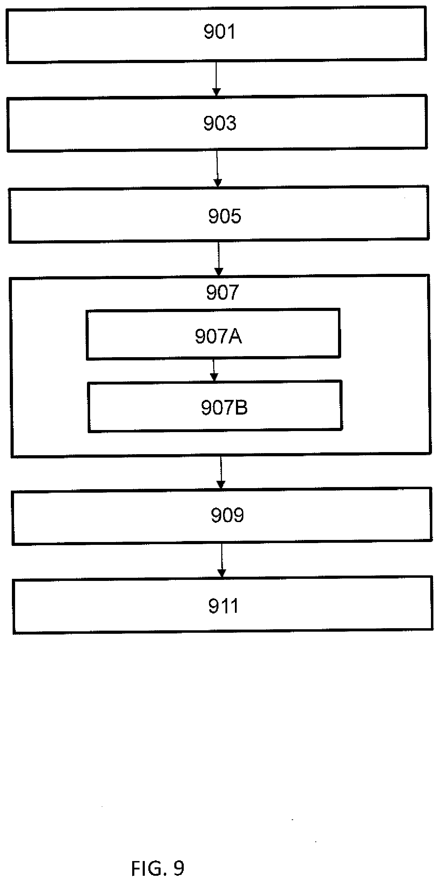

The control unit 819 may receive in step 901 of FIG. 9 from the backend server 811 via the network (e.g. via the established communication link) a first markup-language document. For example, the first markup-language document may be received in response to a request sent by the control unit 819 via the network (e.g. via the established communication link). For example, the submission of the request may be triggered by a selection of a user interface element of the graphical user interface 827. In another example, the submission of the request by the control unit 819 of the first markup-language document from the backend server 811 may be triggered in response to launching or executing the mobile application 815.

In a further example, the first markup-language document may be automatically received by the control unit 819. For example, the mobile application 815 may comprise a weather application that when executed display on the graphical user interface 827 a data table indicating the different weather statuses over time. The first markup-language record may comprise an XML, HTML, XHTML, cHTML, TXTML or WML file.

The first markup-language document encodes first instructions that when executed on the processor 803 cause the processor 803 to display on the graphical user interface 827 a data table e.g. 845 in accordance with a first display pattern.

The first display pattern indicates a graphical and a spatial representation of user interface elements on the graphical user interface. The user interface elements are used to display the data table on the graphical user interface 827. For example, the first display pattern may indicate a user interface element (e.g. a box) of the user interface elements to be displayed in the center of the graphical user interface 827 inside which the data table 845 may be displayed. The first display pattern may further indicate that a label of the user interface elements may be displayed to describe at least part of the data table e.g. a data row. For example, the first display pattern may indicate a cell padding that specifies the space between the cell content and its borders of the data table 845.

The user interface elements may further comprise selectable buttons that may for example describe content of the data table 845 e.g. by selecting a button of the selectable buttons (detailed) data associated with the row of the selectable button may be retrieved from the backend server 81 if the data is not locally stored at the mobile telecommunication device 800, otherwise the data stored at the mobile telecommunication device may be used. The first display pattern may further indicate display attributes such as font size, type of colors to be used etc. The first display pattern may be provided as a configuration text file that contains configuration data indicative of the first display pattern.

In response to receiving the first markup-language document the control unit 819 may determine in step 903 using the graphical user interface that the first display pattern requires at least one scrollbar on the graphical user interface in order to display the data table. For example, the control unit 819 may use the size or dimensions of the graphical user interface 827 (i.e. which takes into account the size of the display device 825) and the size of the data table 845 e.g. number of entries, the style that is used in the first display pattern to display the data table e.g., each entry (cell) of the data table may be displayed using a box of size 1cmx1cm in order to determine that at least one scrollbar is to be used. For example, if a data row of the data table 845 has 30 entries, the control unit 819 may determine that the data table 845 cannot be displayed on a visible display page of the graphical user interface 827. The control unit 819 may for example determine that a single visible display page may comprise only 10 entries of the 30 entries. In this case, a horizontal scrollbar may be required and in addition the control unit 819 may determine that at least two scrolling operations may be required (e.g., to display entries 11-20 and entries 21-30). Thus the scrolling activity may comprise a usage of the horizontal scrollbar for performing at least two scrolling operations.

The determining using the graphical user interface that the first display pattern requires at least one scrollbar may be performed with or without displaying the data table 845 on the graphical user interface 827 i.e. with or without executing the first instructions. For example, the control unit 819 may parse the first markup-language record, and may use other metadata descriptive of the display device 825 as well as the graphical user interface 827 that is generated by the mobile application 815. In case the data table is displayed in accordance with the first display pattern i.e. first instructions executed, only a visible data portion of the data table 845 associated with visible entries (e.g. e12) may be received or downloaded from the backend server 811. The hidden data portion of the data table 845 that is associated with non-displayed entries e.g. e15 may not be received from the backend server. In other terms, if the first instructions are not executed none of the visible and hidden data portion may be received from the backend server 811. This may save storage resources and bandwidth in case the determining that the first display pattern requires at least one scrollbar is performed without executing the first instructions.

However, the scrolling of the at least one scrollbar may require or consume more power or energy of the mobile telecommunication device 800 and may further need network bandwidths. Following the above example, for displaying the other 11-20 or 21-30 entries after performing the scrolling of the horizontal scrollbar 837 of the graphical user interface 827 the mobile telecommunication device 800 may have to retrieve or request data related to entries 11-20 from the backend server 811 and thus may require network bandwidths.

The control unit 819 may read in step 905 from the memory 807 a second display pattern which may be used instead of the first display pattern in order to avoid or reduce the at least one scrollbar e.g. multiple scrollbars. The second display pattern may dynamical be defined by the control unit 819 or may be predefined e.g. as a user input. For example, the second display pattern may be defined using dimensions or size of the graphical user interface 827 or the display device 825 and then stored in the memory 807. The second display pattern involves a number of scrollbars that is smaller than the at least one scrollbar for displaying the data table. For example, the second display pattern may indicate a cell padding that is different from the first display pattern e.g. that specifies smaller space between the cell content and its borders of the data table 845. In another example, the second display pattern may indicate that horizontal scrolling bar is to be eliminated e.g. by defining an area in the graphical user interface within which the entries shall be displayed. For example, the second display pattern may indicate a box in the graphical user in terface such that the data table 845 fits within that box. The box may for example, a number of scrolling bars that is smaller than the at least one scrollbar of the first display pattern. This may be done by rearranging the entries of the data table 845 such that a maximum number of entries may fit in a single display page of the graphical user interface 827. The second display pattern may be provided as a configuration text file that contains configuration data indicative of the second display pattern.

The term "display page" refers to a portion of the graphical user interface 827 to be displayed on display device 825 in a manner perceivable or visible by a user e.g. without using scrolling function of the graphical user interface 827.

Following the above example, depending on the size of the display device 825 and/or the size of the graphical user interface 827 the entries 1-30 may be rearranged such that entries 1-20 may be displayed on a single display page of the graphical user interface 827. In this case, scrolling operations may be reduced (although the same number of scrollbars is maintained) e.g. to only perform a single scroll operation to display entries 21-30. In another example, the scrolling operations may be eliminated such that all entries 1-30 may be displayed on a single display page of the graphical user interface 827.

The control unit 819 may generate in step 907 a second markup-language document from the first markup-language document. The second markup-language document encodes second instructions that when executed on the processor 803 cause the processor 803 to display the data table 845 in accordance with the second display pattern.

In one example, for performing strep 907 the mobile telecommunication device 800 may provide in step 907A one or more display arrangement templates. The one or more display arrangement templates may be predefined templates that are stored e.g. in the memory 807 of the mobile telecommunication device 800. In another example, the predefined templates may be received from the backend server 811. A display arrangement template as shown and described with reference to the presentation template of FIG. 3 of the one or more display arrangement templates comprises a map of predefined display positions on the graphical user interface 827 of each entry of the data table 845. The different one or more display arrangement templates may be created or generated for each kind of applications that generate data tables in predefined forms (e.g. a form may indicate N rows and M columns wherein the size of each cell is nxn cm² and the font size used to display the table etc.) Those predefined forms may be used to design the display arrangement template such that the entries of the data tables may be rearranged efficiently in order to reduce the scrollbars and/or scrolling activities. For example, the mobile application 815 may be assigned a respective display arrangement template that may be used for data tables generated by the mobile application 815. The control unit 819 may select in step 907B a display arrangement template of the one or more display arrangement templates whose display positons match or fulfil the second display pattern. For example, a display arrangement template that can fit in the box defined by the second display pattern may be selected. The second instructions may thus be generated for displaying entries of the data table 845 in accordance with the display positions of the selected display arrangement template. For example, the second instructions may comprise instructions to place every entry of the data table 845 in a corresponding position of the graphical user interface 827 as defined by the selected display arrangement template. In another example, the second display pattern may comprise a display arrangement template, and thus the selected display arrangement template may be a display arrangement template that is comprised in the second display pattern.

The control unit 819 may thus display in step 909 using the second markup language record the data table in the graphical user interface 827 as shown in FIG. 8.

In step 911, the control unit 819 may receive a selection of a selectable button e.g. 847of the selectable buttons for requesting data from the backend server 817. The requested data may be the detailed information of entries of the data row 849 that comprises the button 847. The request and reception of data may be performed using another established communication link.

In one embodiment, the visible portion of the data table (if not downloaded before) and the hidden portion of the data table 845 may be downloaded and only after completion of the download and storing at the mobile telecommunication device (e.g. in the cache 817) the hidden and visual portions of the data table steps 905-911 may be executed. In this case, the step 911 may be executed in case the requested data is not locally stored. This may save processing resources such as network bandwidths as multiple connections to the backend server 811 may be avoided. The processing time may be saved as well.

## Claims

1. A telecommunication method for operating a handheld mobile telecommunication device (800) being coupled to a mobile wireless cellular digital telecommunication network (813), the mobile telecommunication device (800) comprising a battery for powering the mobile telecommunication device (800), the mobile telecommunication device (800) further comprising a processor (803), display device (825) and memory (807), wherein the mobile telecommunication device (800) executes at least one mobile application (815), the mobile application (815) comprising instructions that, when executed on the processor, cause the processor to display on the display device (825) a graphical user interface (827), the mobile telecommunication device (800) being connected to a backend server (811) via the network (813), the method comprising:
a) establishing by the mobile telecommunication device (800) a communication link between the mobile telecommunication device and the backend server (811) over the network (813);
b) sending by the mobile telecommunication device to the backend server via the established communication link a request of a first markup-language document using the graphical user interface (827);
c) authenticating by the backend server (811) the mobile telecommunication device (800) and in case of a successful authentication sending via the established communication link the first markup-language document;
d) receiving via the communication link the first markup-language document, wherein the first markup-language document encodes first instructions that when executed on the processor cause the processor (803) to display on the graphical user interface (827) a data table (845) in accordance with a first display pattern, wherein the first display pattern indicates a graphical and spatial representation of user interface elements used for displaying the data table on the graphical user interface (827), the user interface elements comprise selectable buttons (847);
e) determining using the graphical user interface (827) that the display of the data table (845) in accordance with the first display pattern requires at least one scrollbar on the graphical user interface (827); determining an amount of processing resources required for scrolling the at least one scrollbar;
determining that at least part of the determined amount of processing resources is higher than a predetermined threshold; and
if the amount of processing resources is higher than the predetermined threshold, switching the mobile telecommunication device into a power saving mode by executing steps f)-i);
f) reading from the memory (807) a second display pattern for rearranging the user interface elements such that the user interface elements completely fit within at least one of a width and height dimension of the display device, wherein the second display pattern involves a number of scrollbars that is smaller than the at least one scrollbar;
g) generating a second markup-language document from the first marfcup-language document, the second markup-language document encoding second instructions that when executed on the processor (803) cause the processor to display the data table in accordance with the second display pattern;
h) displaying using the second markup language document the data table in the graphical user interface (827);
i) receiving a selection of a selectable button (847) of the selectable buttons for requesting data from the backend server (811) using another established communication link, the other established communication link being a secure communication link.

2. The method of claim 1, wherein generating the second markup-language record comprises:
- providing one or more display arrangement templates, wherein a display arrangement template of the one or more display arrangement templates comprises a map of predefined display positions on the graphical user interface of each entry of the data table;
- selecting a display arrangement template of the one or more display arrangement templates whose display positons match the second display pattern, wherein the second display pattern indicates a graphical and spatial representation of user interface elements used for displaying the data table on the graphical user interface such that the user interface elements completely fit within at least one of a width and height dimension of the display device;
- generating the second instructions for displaying entries of the data table in accordance with the display positions of the selected display arrangement template.

3. The method of any of the preceding claims, the method further comprising:
- determining data that is used for displaying content of the data table;
- determining a visible portion of the determined data, wherein the visible portion is a content of a first portion of the data table that is displayable in the graphical user interface;
- determining a hidden portion of the determined data, wherein the hidden portion is a content of a second portion of the data table that is not displayed in the graphical user interface when the first portion of the data table is displayed;
- downloading the visual and hidden portions of the determined data from the backend server;
- upon completion of the download storing at the mobile telecommunication device the hidden and visual portions of the determined data.

4. The method of claim 1, wherein the processing resources comprise at least one of:
- a network bandwidth;
- an energy consumption;

5. The method of claim 4 or 1, wherein the threshold is determined from at least one of:
- a remaining battery lifetime of the battery until the battery needs to be recharged;
- a maximum network bandwidth assigned to the mobile telecommunication.

6. The method of any of the preceding claims, wherein the processor operates in a processor power saving mode when the mobile telecommunication device is switched into the power saving mode, wherein the processor operates at a first clock frequency when the processor operates in the processor power saving mode, wherein the processor operates at a second clock frequency when the processor operates not in the processor power saving mode, wherein the second clock frequency is higher than the first clock frequency.

7. The method of any of the preceding claims 1-5, wherein the processor operates in a processor power saving mode when the mobile telecommunication device is switched into the power saving mode, wherein the processor comprises one or more cores, wherein at least one core of the processor is in standby mode when the processor operates in the processor power saving mode, wherein the at least one core of the at least one processor is not in standby mode when the processor operates not in the processor power saving mode.

8. The method of any of the preceding claims, wherein the at least one scrollbar comprises a horizontal and vertical scrollbars wherein the second display pattern involves a vertical scrollbar.

9. The method of any of the preceding claims, further comprising; receiving a selection of a data row of the data table using a button of the selectable buttons; wherein the second instructions are generated such that when executed cause the processor to display the selected data row only in accordance with the second display pattern.

10. The method of claim 9, further comprising deleting from the mobile telecommunication device data related to non-selected data rows of the data table,

11. A computer program product comprising computer executable instructions which when executed by a processor cause said processor to perform the method steps of the method of any one of the preceding claims.

12. A handheld mobile telecommunication device, the handheld mobile telecommunication device being coupled to a mobile wireless cellular digital telecommunication network, the mobile telecommunication device comprising a battery for powering the mobile telecommunication device, the mobile tele-communication device further comprising a processor, display device and memory, wherein the mobile telecommunication device executes at least one mobile application, the mobile application comprising instructions that, when executed on the processor, cause the processor to display on the display device a graphical user interface, the mobile telecommunication device being connected to a backend server via the network, the mobile telecommunication device being configured for:
- establishing a communication link between the mobile telecommunication device and the backend server over the network;
- sending to the backend server via the established communication link a request of a first markup-language document using the graphical user interface;
- receiving via the communication link the first markup-language document, wherein the first markup-language document encodes first instructions that when executed on the processor cause the processor to display on the graphical user interface a data table in accordance with a first display pattern, wherein the first display pattern indicates a graphical and spatial representation of user interface elements used for displaying the data table on the graphical user interface, the user interface elements comprise selectable buttons;
- determining using the graphical user interface that the display of the data table in accordance with the first display pattern requires at least one scrollbar on the graphical user interface;
- determining an amount of processing resources required for scrolling the at least one scrollbar;
- determining that at least part of the determined amount of processing resources is higher than a predetermined threshold; and
- if the amount of processing resources is higher than the predetermined threshold, switching the mobile telecommunication device into a power saving mode, wherein in the power saving mode the mobile telecommunication device is configured for:
- reading from the memory a second display pattern for rearranging the user interface elements such that the user interface elements completely fit within at least one of a width and height dimension of the display device, wherein the second display pattern involves a number of scrollbars that is smaller than the at least one scrollbar;
- generating a second markup-language document from the first markup-language document, the second markup-language document encoding second instructions that when executed on the processor cause the processor to display the data table in accordance with the second display pattern;
- displaying using the second markup language document the data table in the graphical user interface;
- receiving a selection of a selectable button of the selectable buttons for requesting data from the backend server using another established communication link.

13. A telecommunication system comprising a mobile telecommunication device according to claim 12 and a backend server configured to perform the method step c) of claim 1.

## Patentansprüche

1. Telekommunikationsverfahren zum Betreiben einer tragbaren mobilen Telekommunikationsvorrichtung (800), die mit einem mobilen drahtlosen zellularen digitalen Telekommunikationsnetzwerk (813) gekoppelt ist, wobei die mobile Telekommunikationsvorrichtung (800) eine Batterie zur Energieversorgung der mobilen Telekommunikationsvorrichtung (800) aufweist, wobei die mobile Telekommunikationsvorrichtung (800) ferner einen Prozessor (803), eine Anzeigevorrichtung (825) und einen Speicher (807) aufweist; wobei die mobile Telekommunikationsvorrichtung (800) wenigstens eine mobile Applikation (815) ausführt, wobei die mobile Applikation (815) Anweisungen aufweist, die bei Ausführung an dem Prozessor den Prozessor zum Anzeigen einer grafischen Benutzeroberfläche (827) auf der Anzeigevorrichtung (825) veranlassen, , wobei die mobile Telekommunikationsvorrichtung (800) über das Netzwerk (813) mit einem Backend-Server (811) verbunden ist, wobei das Verfahren Folgendes aufweist:
a) Einrichten einer Kommunikationsverbindung zwischen der mobilen Telekommunikationsvorrichtung und dem Backend-Server (811) über das Netzwerk (813) durch die mobile Telekommunikationsvorrichtung (800);
b) Senden einer Anforderung für ein erstes Auszeichnungssprachendokument unter Verwendung der grafischen Benutzeroberfläche (827) durch die mobile Telekommunikationsvorrichtung über die eingerichtete Kommunikationsverbindung an den Backend-Server;
c) Authentifizieren der mobilen Telekommunikationsvorrichtung (800) durch den Backend-Server (811) und im Fall einer erfolgreichen Authentifizierung Senden des ersten Auszeichnungssprachendokuments über die eingerichtete Kommunikationsverbindung;
d) Empfangen des ersten Auszeichnungssprachendokuments über die Kommunikationsverbindung, wobei das erste Auszeichnungssprachendokument erste Anweisungen codiert, die bei Ausführung an dem Prozessor den Prozessor (803) zum Anzeigen einer Datentabelle (845) gemäß einem ersten Anzeigemuster auf der grafischen Benutzeroberfläche (827) veranlassen, wobei das erste Anzeigemuster eine grafische und räumliche Darstellung von Benutzeroberflächenelementen erkennen lässt, die zum Anzeigen der Datentabelle auf der grafischen Benutzeroberfläche (827) verwendet werden, wobei die Benutzeroberflächenelemente auswählbare Schaltflächen (847) aufweisen;
e) Bestimmen unter Verwendung der grafischen Benutzeroberfläche (827), dass die Anzeige der Datentabelle (845) gemäß dem ersten Anzeigemuster wenigstens eine Bildlaufleiste auf der grafischen Benutzeroberfläche (827) erfordert;
Bestimmen, eines Betrags der zum Verschieben der wenigstens einen Bildlaufleiste erforderlichen Verarbeitungsressourcen; Bestimmen, dass wenigstens Teil des bestimmten Verarbeitungsressourcenbetrags höher als ein vorbestimmter Schwellenwert ist; und, wenn der Verarbeitungsressourcenbetrag höher als der vorbestimmte Schwellenwert ist, Umschalten der mobilen Telekommunikationsvorrichtung in einen Energiesparmodus durch Ausführen der Schritte f) bis i):
f) Auslesen eines zweiten Anzeigemusters aus dem Speicher (807) zum Umordnen der Benutzeroberflächenelemente, so dass die Benutzeroberflächenelemente vollständig in wenigstens eines von einem Breiten- und einem Höhenmaß der Anzeigevorrichtung passen, wobei das zweite Anzeigemuster eine Anzahl von Bildlaufleisten beinhaltet, die kleiner als die wenigstens eine Bildlaufleiste ist;
g) Generieren eines zweiten Auszeichnungssprachendokuments anhand des ersten Auszeichnungssprachendokuments, wobei das zweite Auszeichnungssprachendokument zweite Anweisungen codiert, die bei Ausführung an dem Prozessor (803) den Prozessor zum Anzeigen der Datentabelle gemäß dem zweiten Anzeigemuster veranlassen;
h) Anzeigen des Benutzens des zweiten Auszeichnungssprachendokuments der Datentabelle in der grafischen Benutzeroberfläche (827);
i) Empfangen einer Auswahl einer auswählbaren Schaltfläche (847) der auswählbaren Schaltflächen zum Anfordern von Daten aus dem Backend-Server (811) unter Verwendung einer weiteren eingerichteten Kommunikationsverbindung, wobei die andere eingerichtete Kommunikationsverbindung eine sichere Kommunikationsverbindung ist.

2. Verfahren nach Anspruch 1, wobei das Generieren des zweiten Auszeichnungssprachendatensatzes Folgendes aufweist:
- Bereitstellen von einer oder mehr Anzeigeanordnungsschablonen, wobei eine Anzeigeanordnungsschablone der einen oder mehr Anzeigeanordnungsschablonen eine Karte vordefinierter Anzeigepositionen auf der grafischen Benutzeroberfläche von jedem Eintrag der Datentabelle umfasst;
- Auswählen einer Anzeigeanordnungsschablone der einen oder der mehr Anzeigeanordnungsschablonen, deren Anzeigepositionen mit dem zweiten Anzeigemuster übereinstimmen, wobei das zweite Anzeigemuster eine grafische und räumliche Darstellung von Benutzeroberflächenelementen erkennen lässt, die zum Anzeigen der Datentabelle auf der grafischen Benutzeroberfläche verwendet werden, so dass die Benutzeroberflächenelemente vollständig in wenigstens eines von einem Breiten- und Höhenmaß der Anzeigevorrichtung passen;
- Generieren der zweiten Anweisungen zum Anzeigen von Einträgen der Datentabelle gemäß den Anzeigepositionen der ausgewählten Anzeigeanordnungsschablone.

3. Verfahren nach einem der vorhergehenden Ansprüche, wobei das Verfahren ferner Folgendes aufweist:
- Bestimmen von Daten, die zum Anzeigen von Inhalt der Datentabelle verwendet werden;
- Bestimmen eines sichtbaren Teils der vorbestimmten Daten, wobei der sichtbare Teil ein Inhalt eines ersten Teils der Datentabelle ist, der in der grafischen Benutzeroberfläche angezeigt werden kann.
- Bestimmen eines versteckten Teils der vorbestimmten Daten, wobei der versteckte Teil ein Inhalt eines zweiten Teils der Datentabelle ist, der nicht in der grafischen Benutzeroberfläche anzeigt wird, wenn der erste Teil der Datentabelle angezeigt wird;
- Herunterladen der visuellen und versteckten Teile der bestimmten Daten aus dem Backend-Server;
- nach Abschluss des Herunterladens Speichern der versteckten und visuellen Teile der bestimmten Daten an der mobilen Telekommunikationsvorrichtung.

4. Verfahren nach Anspruch 1, wobei die Verarbeitungsressourcen wenigstens eine der Folgenden umfassen:
- einen Netzwerkbandbreite;
- einen Energieverbrauch.

5. Verfahren nach Anspruch 4 oder 1, wobei der Schwellenwert anhand wenigstens eines der Folgenden bestimmt wird:
- einer noch verbleibenden Batterielebensdauer der Batterie, bis die Batterie wiederaufgeladen werden muss;
- einer maximalen Netzwerkbandbreite, die der mobilen Telekommunikation zugewiesen ist.

6. Verfahren nach einem der vorhergehenden Ansprüche, wobei der Prozessor in einem Prozessor-Energiesparmodus betrieben wird, wenn die mobile Telekommunikationsvorrichtung in den Energiesparmodus geschaltet wird, wobei der Prozessor mit einer ersten Taktfrequenz betrieben wird, wenn der Prozessor im Prozessor-Energiesparmodus betrieben wird, wobei der Prozessor mit einer zweiten Taktfrequenz betrieben wird, wenn der Prozessor nicht im Prozessor-Energiesparmodus betrieben wird, wobei die zweite Taktfrequenz höher als die erste Taktfrequenz ist.

7. Verfahren nach einem der Ansprüche 1 bis 5, wobei der Prozessor in einem Prozessor-Energiesparmodus betrieben wird, wenn die mobile Telekommunikationsvorrichtung in den Energiesparmodus geschaltet wird, wobei der Prozessor einen oder mehr Kerne umfasst, wobei wenigstens ein Kern des Prozessors im Bereitschaftsmodus ist, wenn der Prozessor im Prozessor-Energiesparmodus betrieben wird, wobei der wenigstens eine Kern des wenigstens einen Prozessors nicht im Bereitschaftsmodus ist, wenn der Prozessor nicht im Prozessor-Energiesparmodus betrieben wird.

8. Verfahren nach einem der vorhergehenden Ansprüche, wobei die wenigstens eine Bildlaufleiste eine horizontale und eine vertikale Bildlaufleiste umfasst, wobei das zweite Anzeigemuster eine vertikale Bildlaufleiste beinhaltet.

9. Verfahren nach einem der vorhergehenden Ansprüche, das ferner Folgendes aufweist: Empfangen einer Auswahl einer Datenzeile der Datentabelle unter Verwendung einer Schaltfläche der auswählbaren Schaltflächen; wobei die zweiten Anweisungen so generiert werden, dass sie bei Ausführung den Prozessor zum Anzeigen der ausgewählten Datenzeile nur gemäß dem zweiten Anzeigemuster veranlassen.

10. Verfahren nach Anspruch 9, das ferner das Löschen von auf nicht ausgewählte Datenzeilen der Datentabelle bezogenen Daten aus der mobilen Telekommunikationsvorrichtung aufweist.

11. Computerprogrammprodukt, das per Computer ausführbare Anweisungen aufweist, die bei Ausführung durch einen Prozessor den genannten Prozessor zum Durchführen der Verfahrensschritte des Verfahrens nach einem der vorhergehenden Ansprüche veranlassen.

12. Tragbare mobile Telekommunikationsvorrichtung, wobei die tragbare mobile Telekommunikationsvorrichtung mit einem mobilen drahtlosen zellularen digitalen Telekommunikationsnetzwerk gekoppelt ist, wobei die mobile Telekommunikationsvorrichtung eine Batterie zur Energieversorgung der mobilen Telekommunikationsvorrichtung aufweist, wobei die mobile Telekommunikationsvorrichtung ferner einen Prozessor, eine Anzeigevorrichtung und einen Speicher aufweist; wobei die mobile Telekommunikationsvorrichtung wenigstens eine mobile Applikation ausführt, wobei die mobile Applikation Anweisungen aufweist, die bei Ausführung an dem Prozessor den Prozessor zum Anzeigen einer grafischen Benutzeroberfläche auf der Anzeigevorrichtung veranlassen, wobei die mobile Telekommunikationsvorrichtung über das Netzwerk mit einem Backend-Server verbunden ist, wobei die mobile Telekommunikationsvorrichtung konfiguriert ist zum:
- Einrichten einer Kommunikationsverbindung zwischen der mobilen Telekommunikationsvorrichtung und dem Backend-Server über das Netzwerk;
- Senden einer Anforderung für ein erstes Auszeichnungssprachendokument unter Verwendung der grafischen Benutzeroberfläche über die eingerichtete Kommunikationsverbindung an den Backend-Server;
- Empfangen des ersten Auszeichnungssprachendokuments über die Kommunikationsverbindung, wobei das erste Auszeichnungssprachendokument erste Anweisungen codiert, die bei Ausführung an dem Prozessor den Prozessor zum Anzeigen einer Datentabelle gemäß einem ersten Anzeigemuster auf der grafischen Benutzeroberfläche veranlassen, wobei das erste Anzeigemuster eine grafische und räumliche Darstellung von Benutzeroberflächenelementen erkennen lässt, die zum Anzeigen der Datentabelle auf der grafischen Benutzeroberfläche verwendet werden, wobei die Benutzeroberflächenelemente auswählbare Schaltflächen aufweisen;
- Bestimmen unter Verwendung der grafischen Benutzeroberfläche, dass die Anzeige der Datentabelle gemäß dem ersten Anzeigemuster wenigstens eine Bildlaufleiste auf der grafischen Benutzeroberfläche erfordert;
- Bestimmen, eines Betrags der zum Verschieben der wenigstens einen Bildlaufleiste erforderlichen Verarbeitungsressourcen;
- Bestimmen, dass wenigstens Teil des bestimmten Verarbeitungsressourcenbetrags höher als ein vorbestimmter Schwellenwert ist; und,
- wenn der Verarbeitungsressourcenbetrag höher als der vorbestimmte Schwellenwert ist, Umschalten der mobilen Telekommunikationsvorrichtung in einen Energiesparmodus, wobei die mobile Telekommunikationsvorrichtung im Energiesparmodus konfiguriert ist zum:
- Auslesen eines zweiten Anzeigemusters aus dem Speicher zum Umordnen der Benutzeroberflächenelemente, so dass die Benutzeroberflächenelemente vollständig in wenigstens eines von einem Breiten- und einem Höhenmaß der Anzeigevorrichtung passen, wobei das zweite Anzeigemuster eine Anzahl von Bildlaufleisten beinhaltet, die kleiner als die wenigstens eine Bildlaufleiste ist;
- Generieren eines zweiten Auszeichnungssprachendokuments anhand des ersten Auszeichnungssprachendokuments, wobei das zweite Auszeichnungssprachendokument zweite Anweisungen codiert, die bei Ausführung an dem Prozessor den Prozessor zum Anzeigen der Datentabelle gemäß dem zweiten Anzeigemuster veranlassen;
- Anzeigen des Benutzens des zweiten Auszeichnungssprachendokuments der Datentabelle in der grafischen Benutzeroberfläche;
- Empfangen einer Auswahl einer auswählbaren Schaltfläche der auswählbaren Schaltflächen zum Anfordern von Daten aus dem Backend-Server unter Verwendung einer weiteren eingerichteten Kommunikationsverbindung.

13. Telekommunikationssystem, das eine mobile Telekommunikationsvorrichtung nach Anspruch 12 und einen Backend-Server aufweist, der zum Durchführen des Verfahrensschritts c) von Anspruch 1 konfiguriert ist.

## Revendications

1. Procédé de télécommunication pour faire fonctionner un dispositif mobile de télécommunication portable (800) étant couplé à un réseau mobile de télécommunication numérique cellulaire sans fil (813), le dispositif mobile de télécommunication (800) comprenant une batterie pour alimenter le dispositif mobile de télécommunication (800), le dispositif mobile de télécommunication (800) comprenant en outre un processeur (803), un dispositif d'affichage (825) et une mémoire (807) ; où le dispositif mobile de télécommunication (800) exécute au moins une application mobile (815), l'application mobile (815) comprenant des instructions qui, quand elles sont exécutées par le processeur, amènent le processeur à afficher sur le dispositif d'affichage (825) une interface graphique d'utilisateur (827), le dispositif mobile de télécommunication (800) étant connecté à un serveur dorsal (811) par le biais du réseau (813), le procédé comprenant :
a) l'établissement, par le dispositif mobile de télécommunication (800), d'un lien de communication entre le dispositif mobile de télécommunication et le serveur dorsal (811) par l'intermédiaire du réseau (813) ;
b) l'envoi, par le dispositif mobile de télécommunication, en direction du serveur dorsal, par le biais du lien de communication établi, d'une demande d'un premier document en langage de balisage en utilisant l'interface graphique d'utilisateur (827) ;
c) l'authentification, par le serveur dorsal (811), du dispositif mobile de télécommunication (800) et dans le cas d'une authentification couronnée de succès, l'envoi, par le biais du lien de communication établi, du premier document en langage de balisage ;
d) la réception, par le biais du lien de communication, du premier document en langage de balisage, où le premier document en langage de balisage encode les premières instructions qui, quand elles sont exécutées par le processeur, amènent le processeur (803) à afficher sur l'interface graphique d'utilisateur (827) une table de données (845) en conformité avec un premier motif d'affichage, où le premier motif d'affichage indique une représentation graphique et spatiale des éléments de l'interface d'utilisateur utilisée pour l'affichage de la table des données sur l'interface graphique d'utilisateur (827), les éléments de l'interface d'utilisateur comprennent des touches de sélection (847) ;
e) la détermination, en utilisant l'interface graphique d'utilisateur (827), que l'affichage de la table des données (845) en conformité avec le premier motif d'affichage nécessite au moins une barre de défilement sur l'interface graphique d'utilisateur (827) ;
la détermination d'une quantité de ressources de processeur nécessaires pour faire défiler l'au moins une barre de défilement ;
la détermination qu'au moins une partie de la quantité déterminée des ressources de processeur est supérieure à un seuil prédéterminé ; et si la quantité des ressources du processeur est supérieure au seuil prédéterminé, le basculement du dispositif mobile de télécommunication dans un mode d'économie de l'énergie par l'exécution des étapes f) à i) ;
f) la lecture, à partir de la mémoire (807), d'un second motif d'affichage pour réarranger les éléments de l'interface d'utilisateur de sorte que les éléments de l'interface d'utilisateur s'intègrent entièrement à l'intérieur au moins d'une dimension parmi une dimension en largeur et une dimension en hauteur du dispositif d'affichage, où le second motif d'affichage concerne un nombre de barres de défilement qui est plus petit que l'au moins une barre de défilement ;
g) la génération d'un second document en langage de balisage à partir du premier document en langage de balisage, le second document en langage de balisage encodant des secondes instructions qui, quand elles sont exécutées par le processeur (803), amènent le processeur à afficher la table des données en conformité avec le second motif d'affichage ;
h) l'affichage, en utilisant le second document en langage de balisage, de la table des données dans l'interface graphique d'utilisateur (827) ;
i) la réception d'un choix d'une touche de sélection (847) parmi les touches de sélection pour demander des données à partir du serveur dorsal (811) en utilisant un autre lien de communication établi, l'autre lien de communication établi étant un lien de communication sécurisé.

2. Procédé selon la revendication 1, dans lequel la génération du second enregistrement en langage de balisage comprend :
- la fourniture d'un ou de plusieurs modèles d'arrangement de l'affichage, où un modèle d'arrangement de l'affichage parmi le ou les modèles d'arrangement de l'affichage comprend un plan des positions d'affichage prédéfinies sur l'interface graphique d'utilisateur de chaque entrée de la table des données ;
- le choix d'un modèle d'arrangement de l'affichage parmi le ou les modèles d'arrangement de l'affichage dont les positions d'affichage correspondent au second motif d'affichage, où le second motif d'affichage indique une représentation graphique et spatiale des éléments de l'interface d'utilisateur utilisés pour afficher la table des données sur l'interface graphique d'utilisateur de sorte que les éléments de l'interface d'utilisateur s'intègrent entièrement dans au moins une dimension parmi une dimension en largeur et une dimension en hauteur du dispositif d'affichage ;
- la génération des secondes instructions pour afficher des entrées de la table des données en conformité avec les positions de l'affichage du modèle d'arrangement de l'affichage choisi.

3. Procédé selon l'une quelconque des revendications précédentes, le procédé comprenant en outre :
- la détermination de données qui sont utilisées pour afficher le contenu de la table de données ;
- la détermination d'une partie visible des données déterminées, où la partie visible est un contenu d'une première partie de la table de données qui peut être affiché dans l'interface graphique d'utilisateur ;
- la détermination d'une partie cachée des données déterminées, où la partie cachée est un contenu d'une seconde partie de la table de données qui n'est pas affichée dans l'interface graphique d'utilisateur quand la première partie de la table des données est affichée ;
- le téléchargement des parties visuelle et cachée des données déterminées à partir du serveur dorsal ;
- au moment de l'achèvement du téléchargement, le stockage au niveau du dispositif mobile de télécommunication des parties visible et cachée des données déterminées.

4. Procédé selon la revendication 1, dans lequel les ressources du processeur comprennent au moins un élément parmi :
- une bande passante de réseau ;
- une consommation d'énergie.

5. Procédé selon la revendication 4 ou 1, dans lequel le seuil est déterminé à partir d'au moins un élément parmi :
- une durée de fonctionnement de batterie de la batterie jusqu'à ce que la batterie ait besoin d'être rechargée ;
- une bande passante maximale du réseau affectée au dispositif mobile de télécommunication.

6. Procédé selon l'une quelconque des revendications précédentes, dans lequel le processeur fonctionne dans un mode d'économie en énergie de processeur quand le dispositif mobile de télécommunication est basculé dans le mode d'économie en énergie, où le processeur fonctionne à une première fréquence d'horloge quand le processeur fonctionne dans le mode d'économie en énergie de processeur, où le processeur fonctionne à une seconde fréquence d'horloge quand le processeur ne fonctionne pas dans le mode d'économie en énergie de processeur, où la seconde fréquence d'horloge est plus élevée que la première fréquence d'horloge.

7. Procédé selon l'une quelconque des revendications 1 à 5 précédentes, dans lequel le processeur fonctionne dans un mode d'économie en énergie de processeur quand le dispositif mobile de télécommunication est basculé dans le mode d'économie en énergie, où le processeur comprend un ou plusieurs coeurs, où au moins un coeur du processeur est dans un mode de veille quand le processeur fonctionne dans le mode d'économie en énergie de processeur, où l'au moins un coeur de l'au moins un processeur n'est pas dans un mode de veille quand le processeur ne fonctionne pas dans le mode d'économie en énergie de processeur.

8. Procédé selon l'une quelconque des revendications précédentes, dans lequel l'au moins une barre de défilement comprend des barres de défilement horizontale et verticale, où le second motif d'affichage concerne une barre de défilement verticale.

9. Procédé selon l'une quelconque des revendications précédentes, comprenant en outre : la réception d'un choix d'une ligne de données de la table des données en utilisant une touche parmi les touches de sélection ; où les secondes instructions sont générées de sorte que, quand elles sont exécutées, elles amènent le processeur à afficher la ligne de données choisie uniquement en conformité avec le second motif d'affichage.

10. Procédé selon la revendication 9, comprenant en outre la suppression, à partir du dispositif mobile de télécommunication, des données en relation avec les lignes des données de la table des données qui n'ont pas été choisies.

11. Produit de programme informatique comprenant des instructions exécutables par ordinateur qui, quand elles sont exécutées par un processeur, amènent ledit processeur à effectuer les étapes de procédé du procédé selon l'une quelconque des revendications précédentes.

12. Dispositif mobile de télécommunication portable, le dispositif mobile de télécommunication portable étant couplé à un réseau mobile de télécommunication numérique cellulaire sans fil, le dispositif mobile de télécommunication comprenant une batterie pour alimenter le dispositif mobile de télécommunication, le dispositif mobile de télécommunication comprenant en outre un processeur, un dispositif d'affichage et une mémoire, où le dispositif mobile de télécommunication exécute au moins une application mobile, l'application mobile comprenant des instructions qui, quand elles sont exécutées par la processeur, amènent le processeur à afficher sur le dispositif d'affichage une interface graphique d'utilisateur, le dispositif mobile de télécommunication étant connecté à un serveur dorsal par le biais du réseau, le dispositif mobile de télécommunication étant configuré pour :
- établir un lien de communication entre le dispositif mobile de télécommunication et le serveur dorsal sur le réseau ;
- envoyer, en direction du serveur dorsal par le biais du lien de communication établi, une demande d'un premier document en langage de balisage en utilisant l'interface graphique d'utilisateur ;
- recevoir, par le biais du lien de communication, le premier document en langage de balisage, où le premier document en langage de balisage encode les premières instructions qui, quand elles sont exécutées par le processeur, amènent le processeur à afficher sur l'interface graphique d'utilisateur une table de données en conformité avec un premier motif d'affichage, où le premier motif d'affichage indique une représentation graphique et spatiale des éléments de l'interface d'utilisateur utilisée pour l'affichage de la table des données sur l'interface graphique d'utilisateur, les éléments de l'interface d'utilisateur comprennent des touches de sélection ;
- déterminer, en utilisant l'interface graphique d'utilisateur, que l'affichage de la table des données en conformité avec le premier motif d'affichage nécessite au moins une barre de défilement sur l'interface graphique d'utilisateur ;
- déterminer une quantité de ressources du processeur nécessaires pour faire défiler l'au moins une barre de défilement ;
- déterminer qu'au moins une partie de la quantité déterminée des ressources du processeur est supérieure à un seuil prédéterminé ; et
- si la quantité des ressources du processeur est supérieure au seuil prédéterminé, basculer le dispositif mobile de télécommunication dans un mode d'économie en énergie, où, dans le mode d'économie en énergie, le dispositif mobile de télécommunication est configuré pour :
- la lecture, à partir de la mémoire, d'un second motif d'affichage pour le réarrangement des éléments d'interface d'utilisateur de sorte que les éléments d'interface d'utilisateur s'intègrent entièrement dans au moins une dimension parmi la dimension en largeur et la dimension en hauteur de dispositif d'affichage, où le second motif d'affichage concerne un nombre de barres de défilement qui est plus petit que l'au moins une barre de défilement ;
- la génération d'un second document en langage de balisage à partir du premier document en langage de balisage, le second document en langage de balisage encodant des secondes instructions qui, quand elles sont exécutées par le processeur, amènent le processeur à afficher la table des données en conformité avec le second motif d'affichage ;
- d'affichage, en utilisant le second document en langage de balisage, de la table de données dans l'interface graphique d'utilisateur ;
- de réception d'un choix d'une touche de sélection parmi les touches de sélection pour demander des données à partir du serveur dorsal en utilisant un autre lien de communication établi.

13. Système de télécommunication comprenant un dispositif mobile de télécommunication selon la revendication 12 et un serveur dorsal configuré pour exécuter l'étape c) du procédé selon la revendication 1.
